(19) Europäisches Patentamt
European Patent Office
Office européen des brevets

(11) EP 1 390 424 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**31.12.2008 Patentblatt 2009/01**

(45) Hinweis auf die Patenterteilung:
**26.10.2005 Patentblatt 2005/43**

(21) Anmeldenummer: **02762278.6**

(22) Anmeldetag: **29.05.2002**

(51) Int Cl.:
***C08G 73/02*** *(2006.01)* ***A61K 6/10*** *(2006.01)*

(86) Internationale Anmeldenummer:
**PCT/EP2002/005916**

(87) Internationale Veröffentlichungsnummer:
**WO 2002/102877 (27.12.2002 Gazette 2002/52)**

(54) **N-ALKYLAZIRIDINOPREPOLYMERE ALS DENTALMASSE**

N-ALKYLAZIRIDINE PREPOLYMERS AS A DENTAL MATERIAL

PREPOLYMERES N-ALKYLAZIRIDINO EN TANT QUE MASSE DENTAIRE

(84) Benannte Vertragsstaaten:
**AT BE CH CY DE DK ES FI FR GB GR IE IT LI LU MC NL PT SE TR**

(30) Priorität: **31.05.2001 DE 10126476**

(43) Veröffentlichungstag der Anmeldung:
**25.02.2004 Patentblatt 2004/09**

(73) Patentinhaber: **3M ESPE AG**
**82229 Seefeld (DE)**

(72) Erfinder:
- **ECKHARDT, Gunther**
  **06231 Bad Dürrenberg (DE)**
- **LECHNER, Günther**
  **82237 Wörthsee (DE)**
- **WANEK, Erich**
  **86916 Kaufering (DE)**

(56) Entgegenhaltungen:
**DE-A- 2 715 818**
**DE-A- 3 246 654**
**DE-A- 19 740 234**
**DE-A1- 3 728 216**
**DE-A1- 19 942 459**
**US-A1- 3 453 242**

EP 1 390 424 B2

## Beschreibung

Die Erfindung betrifft N-Alkylaziridinoprepolymere und ihre Verwendung in Massen, die durch polymerbildende Reaktionen aushärten.

Insbesondere betrifft die Erfindung solche N-Alkylaziridinoprepolymere, die sich infolge Kettenverlängerung durch eine breite Molmassenverteilung auszeichnen und die in der Zahnmedizin und der Zahntechnik für Abformungen verwendet werden können.

Elastische Abformmassen auf der Grundlage von N-Alkylaziridinomonomeren sind seit langem bekannt. So beschreibt beispielsweise die DE-C-174 58 10 die Herstellung von Formkörpem auf der Basis von Aziridinopolyethem.

In den Schriften DE-C-32 46 654, EP-A-0 421 371 und EP-A-0 110 429 ist die Verwendung von Aziridinopolyethem in Polyetherabformmassen beschrieben.

Abformmassen auf der Grundlage von N-Alkylaziridinopolyethem bestehen meist aus einer Katalysatorkomponente und einer Basiskomponente, die getrennt gelagert und vor der Anwendung gemischt werden.

Bei der zahnmedizinischen Anwendung wird die noch fließfähige gemischte Zubereitung meist auf einem Abformlöffel in den Mund des Patienten eingebracht, auf die Zahnreihe gedrückt und erstarrt zu einem elastischen Festkörper infolge polymerbildender Reaktionen der verwendeten N-Alkylaziridinopolyether.

Es bestehen vielfältige Forderungen hinsichtlich der Verarbeitbarkeit der gemischten Zubereitung und der Eigenschaften des entstehenden elastischen Festkörpers. Diese Forderungen unterscheiden sich stark je nach der konkreten klinischen Situation und den praktizierten Abformtechniken. Das erfordert die Entwicklung eines Sortimentes verschiedener Abformmassen, die sich durch stark unterschiedliche Eigenschaftskombinationen auszeichnen.

Wesentliche Eigenschaftsforderungen sind der Abbindeverlauf mit einer bestimmten Gesamtverarbeitungszeit und der notwendigen Mundverweildauer sowie die mechanischen Eigenschaften des Elastomerfestkörpers, wie Härte, Festigkeit und elastische Verformbarkeit.

Üblicherweise wird versucht, durch Wahl der Verbindungen der nachstehend beschriebenen Bestandteile (A) bis (E) der gemischten Zubereitung sowie durch Wahl des Verhältnisses dieser Verbindungen untereinander den gewünschten Eigenschaftskombinationen nahe zu kommen.

Bei den bisher beispielsweise in der DE-A-197 40 234 verwendeten N-Alkylaziridinomonomeren war eine unabhängige Einstellung eines Abbindeverlaufs, wie er beispielsweise bei schnell abbindenden Massen zur Herstellung von Einzelkronen gewünscht ist, und den mechanischen Eigenschaften des Elastomerfestkörpers nur eingeschränkt möglich, da eine schnellere Abbindung, wie sie bei erhöhter Aziridinogruppendichte erreicht werden kann, mit höherer Shore-Härte und verringerter Reißfestigkeit und Reißdehnung einhergeht.

Insbesondere erwies es sich als sehr schwierig, bei vorgegebener Gesamtverarbeitungszeit, Reißfestigkeit und Härte, Elastomerfestkörper herzustellen, die sich durch hohe Reißdehnungswerte auszeichnen.

Aufgabe der vorliegenden Erfindung ist es daher, neue N-Alkylaziridinoprepolymere bereitzustellen, auf deren Basis härtbare Zubereitungen hergestellt werden können, die unter Einhaltung von Gesamtverarbeitungszeiten von 90 bis 180 Sekunden nach der Aushärtung Reißfestigkeitswerte von über 1,0 MPa, bestimmt nach EN 24823, und eine Shore A-Härte von 40 bis 60, bestimmt nach DIN 53505, aufweisen und sich durch hohe Reißdehnungswerte auszeichnen.

Diese Aufgabe wird durch N-Alkylaziridinoprepolymere gelöst, die im Vergleich zu aus dem Stand der Technik bekannten N-Alkylaziridinoprepolymeren kettenverlängert sind und die folgende allgemeine Formel aufweisen:

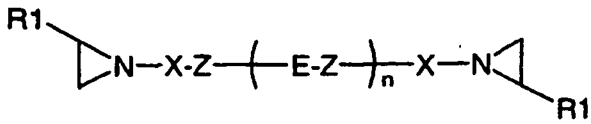

worin bedeuten:

- n: eine ganze Zahl von 1 bis 50;
- R1: H oder $C_1$- bis $C_{12}$-Alkyl;
- X: einen zweiwertigen, gesättigten oder ungesättigten, linearen, verzweigten, cyclischen oder polycyclischen Kohlenwasserstoffrest, der 0 bis 5 Heteroatome aus der Gruppe O, NR1, S enthalten kann und insgesamt 1 bis 50, bevorzugt 2 bis 30 und besonders bevorzugt 2 bis 20C-Atome umfasst und dieser Kohlenwasserstoffrest eine Gruppierung ausgewählt aus einer Gruppe, umfassend -NR1-(C=O)-O-, -(C=O)-O-, -(C=O)-S- enthält, die die kovalente Anbindung zum Polymerrest Z darstellt;
- Z: einen zweiwertigen Prepolymerrest mit zahlenmittleren Molmassen im Bereich von 1.500 bis 45.000 g/Mol aus

der Gruppe, umfassend Polyester, Polycarbonate, Polyolefine, Polysiloxane und Polyether;

E: -X'-A-X'-

A: zweifach radikalischer gesättigter oder ungesättigter linearer, verzweigter, cyclischer oder polycyclischer, gegebenenfalls auch Aromaten enthaltender Kohlenwasserstoffrest, der 0 bis 15 Heteroatome aus der Gruppe O, NR1, S enthalten kann und insgesamt 0 bis 50, bevorzugt 1 bis 30 und besonders bevorzugt 1 bis 20 C-Atome umfasst;

X': zweifach radikalischer gesättigter oder ungesättigter linearer, verzweigter, cyclischer oder polycyclischer, gegebenenfalls auch Aromaten enthaltender Rest, der 0 bis 15 Heteroatome aus der Gruppe O, NR1, S enthalten kann und dieser Rest eine Gruppierung ausgesucht aus einer Gruppe, umfassend: -NR1-(C=O)-O-, -NR1-(C=O)-NR1-, -(C=O)-O-, -(C=O)-S enthält, die die kovalente Anbindung zum Polymerrest Z darstellt.

Jede Auswahl eines über Indizes oder über Mehrfachnennung des Symbols mehrmals genannten Restes im Rahmen dieser Anmeldung ist unabhängig von jeder anderen Auswahl aus derselben Gruppe zu betrachten. Beispielsweise kann die doppelte Nennung des Restes R1 in einem Molekül bedeuten, dass die Position von R1 sowohl durch Methyl- als auch durch Propyl- im gleichen Molekül ersetzt werden kann.

Vorzugsweise weist der Prepolymerrest Z in der obigen Formel eine Polyetherstruktur auf, wobei diese in einer besonders bevorzugten Ausführungsform aus Dimethylenoxy- und Tetramethylenoxy-Einheiten besteht und wobei das molare Verhältnis dieser Monomereinheiten 1 : 2,5 bis 1 : 5 beträgt.

Vorzugsweise ist Z ein zweiwertiger Prepolymerrest mit einer zahlenmittleren Molmasse im Bereich von 5.000 bis 25.000, weiter bevorzugt 6.000 bis 20.000 und besonders bevorzugt im Bereich von 6.000 bis 10.000 g/Mol.

In einer bevorzugten Weise werden die kettenverlängerten N-Alkylaziridinoprepolymere nicht in reiner Form, sondem in Mischung mit nicht kettenverlängerten N-Alkylaziridinopolymeren der Formel

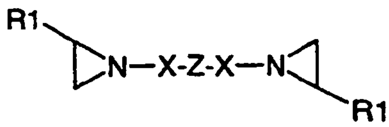

eingesetzt, in welcher R1, X und Z die obige Bedeutung haben.

Bei diesen Mischungen beträgt die Verlängerungszahl (VZ) 2 bis 30, wobei die Verlängerungszahl definiert ist als:

$$VZ = \frac{\frac{\eta_v}{\eta_o}}{\frac{[Az]_v}{[Az]_o}}$$

mit

η = inhärente Viskosität des Prepolymeren, bestimmt mit einem Haake-Viskosimeter bei 23° C, angegeben in Pa · s

[Az] = Konzentration der Aziridinogruppen, bestimmt durch Titration, angegeben in milli-Aziridinoäquivalente/kg

Index $_v$ = bezeichnet die partiell verlängerten Prepolymeren

Index $_o$ = bezeichnet die unverlängerten Prepolymeren.

Bei einer bevorzugten Ausführungsform beträgt die Urethanäquivalentmasse der Mischung 1.500 bis 30.000 g/Urethangruppe.

Die Titration zur Ermittlung der Aziridinogruppenkonzentration wird im Rahmen dieser Anmeldung gemäß R. R. Jay, Anal. Chem. 36, 667 (1964) durchgeführt.

Die Herstellung der Mischungen aus kettenverlängerten und nicht kettenverlängerten N-Alkytaziridinoprepolymeren erfolgt vorzugsweise nach einem der folgenden Verfahren:

(i)

a) kationische Copolymerisation von Ethylenoxid und Tetrahydrofuran unter Verwendung von Starteralkoholen mit zwei OH-Gruppen,
b) Umsetzung des erhaltenen Polyetherdiols in Polyetherdichlorformiate und
c) deren Umsetzung mit Alkylendiamin und mit Iminoalkylenamin im Molverhältnis Polyetherdichlorformiat : Alkylendiamin : Iminoalkylenamin von 1:0,01:2,05 bis 1:0,95:0,15.

(ii)

a) kationische Copolymerisation von Ethylenoxid und Tetrahydrofuran unter Verwendung von Starteralkoholen mit zwei OH-Gruppen,
b) Umsetzung des erhaltenen Polyetherdiols mit Acrylsäure zum Polyetherdiacrylat sowie
c) Anlagerung von Alkylendiamin und davor oder nachfolgend von Ethylenimin an die Acrylatdoppelbindung im Molverhältnis Acrylatgruppe : Alkylendiamin : Ethylenimin von 1:0,01:1 bis 1:0,30:0,45.

(iii)

a) kationische Copolymerisation von Ethylenoxid und Tetrahydrofuran unter Verwendung von Starteralkoholen mit zwei OH-Gruppen,
b) Umsetzung des erhaltenen Polyetherdiols zum Polyetherdioldiimidazolid und dessen
c) Umsetzung mit Alkylendiamin und mit Iminoalkylenamin im Molverhältnis Polyetherdioldiimidazolid : Alkylendiamin : Iminoalkylenamin von 1:0,01:2,05 bis 1:0,95:0,15.

(iv)

a) kationische Copolymerisation von Ethylenoxid und Tetrahydrofuran unter Verwendung von Starteralkoholen mit zwei OH-Gruppen,
b) partielle Kettenverlängerung des Polyetherdiols mit Diisocyanaten im Molverhältnis 1:0,99 bis 1:0,01,
c) Umsetzung der restlichen OH-Gruppen zu N-Alkylaziridinogruppen.

Unter dem Begriff "Mischungen aus kettenverlängerten und nicht kettenverlängerten N-Alkylaziridinoprepolymeren" werden im Rahmen der vorliegenden Erfindung Mischungen verstanden, die ausschließlich aus kettenverlängerten und nicht kettenverlängerten N-Alkylaziridinoprepolymeren bestehen. Ebenso fallen unter diesen Begriff aber auch Mischungen, in denen neben diesen beiden Bestandteilen beispielsweise ein oder mehrere Nebenprodukte enthalten sind, die beispielsweise bei den oben dargestellten Herstellreaktionen gegebenenfalls entstehen können.

Die erfindungsgemäßen N-Alkylaziridinoprepolymere werden im Rahmen der vorliegenden Erfindung in härtbaren Zubereitungen eingesetzt, welche umfassen:

(A) 20 bis 84,9 Gew.-%, bevorzugt 30 bis 59,6 Gew.-% kettenverlängerte N-Alkylaziridinoprepolymere oder Mischungen aus kettenverlängerten mit nichtkettenverlängerten N-Alkylaziridinoprepolymeren,
(B) 5 bis 40 Gew.-%, bevorzugt 10 bis 30 Gew.-% Verbindungen, die eine Weichstellung der ausgehärteten Dentalmassen bewirken,
(C) 10 bis 40 Gew.-%, bevorzugt 15 bis 30 Gew.% Füllstoffe,
(D) 0,1 bis 10 Gew.-%, bevorzugt 0,4 bis 4 Gew.-% Starter,
(E) 0 bis 10 Gew.-%, bevorzugt 0 bis 8 Gew.-% weitere Wirkstoffe, wie Farbstoffe, Aromen, Verzögerer, Beschleuniger, Tenside.

In diesen härtbaren Zusammensetzungen werden vorzugsweise kettenverlängerte N-Alkylaziridinoprepolymere eingesetzt, deren zahlenmittlere Molmasse mindestens den doppelten Wert von nicht kettenverlängerten N-Alkylaziridinoprepolymeren mit einer Molmasse aus dem Bereich von 1.500 bis 45.000 g/Mol aufweist.

Die härtbaren Zusammensetzungen finden als Dentalmassen Verwendung, die in erster Linie für Abformzwecke eingesetzt werden.

Die erfindungsgemäßen N-Alkylaziridinoprepolymeren der Komponente (A) umfassen Diaziridinoverbindungen, die infolge von Kettenverlängerung während der Synthese größere Kettenlängen zwischen den beiden N-Alkylaziridinogruppen im Vergleich zu N-Alkylaziridinoprepolymeren des Stands der Technik aufweisen:

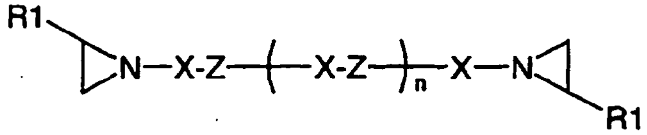

wobei die Variablen und Indizes wie oben definiert zu verstehen sind.

Bevorzugt werden im Rahmen der Erfindung Mischungen aus kettenverlängerten und nicht kettenverlängerten N-Alkylaziridinoprepolymeren eingesetzt.

Überraschenderweise ist unter Verwendung der kettenverlängerten Prepolymeren bei im Vergleich zu nicht-kettenverlängerten Prepolymeren gleicher Konzentration der Aziridinogruppen in der gemischten Zubereitung eine erhöhte Abbindegeschwindigkeit erzielbar. Gleichzeitig ist zur Erzielung der gewünschten Abbindezeit eine deutliche geringere Konzentration der Aziridinogruppen in der gemischten Zubereitung notwendig. Damit können härtbare Zubereitungen mit im Vergleich zum Stand der Technik verbesserter Wirtschaftlichkeit hergestellt werden.

Vorteilhaft ist ferner die verbesserte Einstellbarkeit der Abbindegeschwindigkeit bzw. des Abbindeverlaufs gemäß den Anforderungen des Anwenders durch die Variation des Ausmaßes der Kettenverlängerung. Hierbei befinden sich die mechanischen Eigenschaften des Elastomerfestkörpers auf sehr gutem Niveau.

Der Massenanteil der nicht kettenverlängerten N-Alkylaziridinoprepolymeren beträgt vorzugsweise 50 bis 90 Gew.-%, wobei die zahlenmittlere Molmasse dieses Anteils im Bereich von 1.500 bis 45.000, bevorzugt 5.000 bis 25.000, weiter bevorzugt 6.000 bis 20.000 und besonders bevorzugt im Bereich von 6.000 bis 10.000 g/Mol liegt.

Die zahlenmittleren Molmassen der kettenverlängerten N-Alkylaziridinoprepolymeren können den mehrfachen und mindestens den doppelten Wert der Molmasse des nicht kettenverlängerten Anteils betragen.

Die Urethanäquivalentmassen der nicht kettenverlängerten und der kettenverlängerten Anteile können im Bereich von 2.000 bis 13.000, bevorzugt zwischen 3.000 und 10.000 und besonders bevorzugt zwischen 3.000 und 5.000 g/Urethangruppe liegen.

Unter Urethanäquivalentmasse wird hierbei die Masse in Gramm des N-Alkylaziridinoprepolymeren verstanden, die 1,0 Urethangruppen enthält. Diese Urethanäquivalentmasse kann aus dem molaren Verhältnis und der Molmasse der Edukte berechnet werden. Eine Bestimmung der Urethanäquivalentmasse ist weiterhin mittels spektroskopischer Methoden möglich.

Zur Herstellung der kettenverlängerten N-Alkylaziridinoprepolymeren wird mit Vorteil von Verbindungen ausgegangen, die mindestens zwei und bis zu zehn, bevorzugt genau zwei alkoholische OH-Gruppen besitzen.

Üblicherweise wird dabei von Polyolen, bevorzugt von Polydiolen ausgegangen, wobei die Molekülteile zwischen den OH-Endgruppen unterschiedlichen Verbindungsklassen angehören können: Beispielsweise sind Polyesterpolyole, Polyolefinpolyole, Polycarbonatpolyole, Polyetherpolyole, Polysiloxancarbinole und gemischte Strukturen aus diesen Verbindungsklassen geeignet. Bevorzugt sind Polyetherpolyole, wie sie durch ionische Homo- oder Mischpolymerisation cyclischer Verbindungen, wie Ethylenoxid, Propylenoxid, Tetrahydrofuran, Dioxan, Cyclohexenoxid und Glycidethem zugänglich sind. Besonders bevorzugt sind gemischte Polyether auf der Basis von Ethylenoxid, Propylenoxid und Tetrahydrofuran in unterschiedlichen Verhältnissen dieser Monomeren.

Eine Herstellungsmethode für die Vorstufen der N-Alkylaziridinoprepolymeren ist die kationische Polymerisation von Tetrahydrofuran, Ethylenoxid und/oder Propylenoxid unter katalytischer Wirkung von Borfluorid-Etheraten und unter Verwendung von Starteralkoholen, die mindestens zwei und bis zu zehn, bevorzugt genau zwei OH-Gruppen besitzen.

Nach einer Untervariante dieser Herstellungsmethode werden die hergestellten Polyetherpolyole, insbesondere Polyetherdiole mit einem Diisocyanat, beispielsweise einem Alkylendiisocyanat, bevorzugt 1,6-Hexamethylendiisocyanat, verlängert und somit zu N-Alkylaziridinopolyetherurethanen umgesetzt. Das molare Verhältnis von OH-Gruppe zu Isocyanatgruppe soll hierbei 1:0,99 bis 1:0,01, bevorzugt 1:0,7 bis 1:0,2 und besonders bevorzugt 1:0,55 bis 1:0,35 betragen.

Die oben beschriebene Reaktionsfolge ist nicht auf Polyetherpolyole beschränkt, sondem kann prinzipiell auf Polyole und insbesondere auf Polydiole übertragen werden, deren Molekülteile zwischen den OH-Endgruppen unterschiedlichen Verbindungsklassen, wie vorher beschrieben, angehören.

Nach einer besonders bevorzugten Ausführungsform der Erfindung wird zur Herstellung der N-Alkylaziridinoprepolymeren von Mischpolyethem aus Ethylenoxid und Tetrahydrofuran ausgegangen, wobei das Molverhältnis dieser Monomeren 1:2,5 bis 1:5 und besonders bevorzugt 1:3 bis 1:4 beträgt. Demgemäss enthalten die erfindungsgemäßen N-Alkylaziridinoprepolymeren Tetramethylenoxy-Einheiten im Molekülgerüst zu einem Anteil von 50 bis 95, besonders bevorzugt von 70 bis 90 Masse-%.

Die Herstellung der Aziridinoverbindungen aus Alkoholen kann beispielsweise über Chloroxalate oder Chlorformiate erfolgen, wobei es vorteilhaft sein kann, intermediär aktivierte Amide, wie Imidazolide herzustellen. Als anzulagemde Aziridinoverbindungen kommen beispielsweise Aziridinoethanol oder andere hydroxy- oder aminofunktionelle Aziridinoverbindungen in Betracht, wie sie in Houben-Weyl, Bd. 11/2, S. 272 ff. beschrieben sind.

Zur Erzielung der erfindungsgemäßen partiellen Kettenverlängerung können beispielsweise im Zuge der Herstellung der N-Alkylaziridinoprepolymeren auf der Stufe der Chlorformiate diesen Intermediaten Diamine und Iminoalkylenamine zugesetzt werden.

Nach einer anderen Variante können aus den Polydiolen durch Umsetzung mit Carbonyldiimidazolid die entsprechenden Polydioldiimidazolide hergestellt und auch diesen Intermediaten Diamine und Iminoalkylenamine zugesetzt werden.

Dabei können beide Amin-Verbindungen gemeinsam oder nacheinander in unterschiedlicher Reihenfolge eingesetzt werden.

Das molare Verhältnis von Polydioldichlorformiat bzw. Polydioldiimidazolid zu Diamin und zu Iminoalkylenamin kann in weiten Grenzen variieren und auf Werte von 1:0,01:2,05 bis 1:0,95:0,15, bevorzugt 1:0,05:1,95 bis 1:0,60:0,85 und besonders bevorzugt auf 1:0, 10:1,90 bis 1:0,45:1,20 eingestellt werden.

Als Diamine kommen Verbindungen mit nachfolgender Struktur in Betracht:

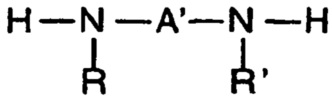

mit

R = R' oder R ≠ R'
R, R' = H oder $C_1$- bis $C_{12}$-Alkyl

A' = zweiwertiger organischer Rest, wie $C_2$- bis $C_{30}$-Alkylen-, $C_6$- bis $C_{30}$-Arylen-, $C_7$- bis $C_{30}$-Alkarylen-, Aralkylen-, $C_3$-$C_{30}$-Cycloalkylen-, wobei bei allen vorgenannten soweit vorhanden 1 bis 10 $CH_2$-Gruppen durch -O- oder -NR-, -S-, -CO-, -COO- ersetzt sein können.

Prinzipiell können primäre und sekundäre Diamine oder auch Diamine mit einer primären und einer sekundären Aminogruppe verwendet werden.

Besonders bevorzugt werden primäre aliphatische Diamine, wie 1,2-Ethylendiamin, 1,4-Butylendiamin, 1,6-Hexamethylendiamin, Trimethylhexamethylendiamin, 4,9-Dioxa-1,12-dodecandiamin, 4,7,10-Trioxa-1,13-tridecandiamin und sekundäre aliphatische Diamine wie beispielsweise Piperazin eingesetzt.

Ein anderer Weg zur Herstellung der erfindungsgemäßen N-Alkylaziridinoprepolymeren ist die Veresterung der alkoholischen OH-Gruppen der zu Beginn der Synthesekette erhaltenen Polyetherpolyole mit einer ungesättigten Carbonsäure, wie Acrylsäure oder Crotonsäure und die nachfolgende Anlagerung von Diamin und Ethylenimin an die Doppelbindung, analog der Vorgehensweise zur Herstellung von Aziridinomonomeren in Beispiel 13 der US-A-3,453,242.

Die Anlagerung der Amine an das Diacrylat kann in unterschiedlicher Reihenfolge durchgeführt werden, wobei ein Molverhältnis Acrylatgruppe : Diamin : Ethylenimin von 1:0,01:1 bis 1:0,30:0,45; bevorzugt 1:0,03:0,98 bis 1:0,20: 0,65 und besonders bevorzugt von 1:0,05:0,95 bis 1:0,15:0,75 eingestellt werden kann.

Unabhängig von der gewählten Methode der Kettenverlängerung kann das erzielte Ausmaß der Kettenverlängerung über die Zunahme der Polydispersität der N-Alkylaziridinoprepolymeren und Vergleich mit der Polydispersität des nicht verlängerten Prepolymeren bestimmt werden. Als Polydispersität (PD) wird hierbei der Quotient aus der gewichtsmittleren Molmasse ($M_w$) und der zahlenmittleren Molmasse ($M_n$) gemäß PD = $M_w$ / $M_n$ angesehen.

Beispielsweise kann durch Endgruppenanalyse der Prepolymeren die zahlenmittlere Molmasse und durch Lichtstreuung die gewichtsmittlere Molmasse bestimmt werden.

Nach Eichung mit definierten Fraktionen ist die Berechnung von Zahlenwerten der Polydispersität auch aus Daten der Gelpermeationschromatografie möglich.

Als leichter zugängliche Kennzahl für das erreichte Ausmaß der Kettenverlängerung und als Ausdruck für die Zunahme der Polydispersität kann eine dimensionslose Verlängerungszahl (VZ) verwendet werden, die nach der Formel:

$$VZ = \frac{\frac{\eta_v}{\eta_o}}{\frac{[Az]_v}{[Az]_o}}$$

aus den Kennwerten der Prepolymeren berechnet werden kann.

Hierin bedeuten:

η = inhärente Viskosität des Prepolymeren bei 23° C, angegeben in Pa · s

[Az] = Konzentration der Aziridinogruppen, bestimmt durch Titration, angegeben in milli-Aziridinoäquivalente pro kg [mAzÄ/kg]

Index $_v$ = bezeichnet die verlängerten Prepolymeren

Index $_o$ = bezeichnet die unverlängerten Prepolymeren.

Im allgemeinen wurde gefunden, dass die erreichbare Reißdehnung der ausgehärteten Elastomeren mit zunehmender Verlängerungszahl steigt und somit für die Einstellung gewünschter Eigenschaftskombinationen des ausgehärteten Elastomeren verbesserte Möglichkeiten bestehen.

Die partiell kettenverlängerten N-Alkylaziridinoprepolymeren gemäß der Erfindung liegen im Wertebereich der Verlängerungszahl VZ von 2,0 bis 30 und bevorzugt 3,0 bis 10.

Die erfindungsgemäßen Zubereitungen können gemäß Bestandteil (B) zwei Klassen von Verbindungen, die eine Weichstellung der ausgehärteten Dentalmassen bewirken, enthalten, nämlich

(B1) typische Weichmacher mit Molmassen kleiner 500 g/Mol,
(B2) bei Raumtemperatur flüssige Polymere mit Molmassen über 2000 g/Mol.

Als Verbindungen gemäß dem Anteil (B1) werden unterschiedliche Weichmachertypen eingesetzt, darunter typische Weichmacher vom Estertyp, wie:

- $C_{12}$- bis $C_{15}$-Alkyllactate,
- Ethyl- oder Butylester der Citronensäure oder der Acetylcitronensäure,
- Phthalsäureester längerer verzweigter Alkohole, wie Bis(2-ethylhexyl)-phthalat oder Phthalsäurepolyester,
- $C_2$- bis $C_{18}$-Dialkylester von $C_2$- bis $C_6$-Dicarbonsäuren, wie Bis(2-ethylhexyl)-adipat, Dioctylmalat, Diisopropyladipat,
- aromatische und aliphatische Sulfonsäureester, wie $C_2$- bis $C_{20}$-Alkylsulfonsäureester des Phenols oder von $C_1$- bis $C_{18}$-Alkanolen

und typische aromatische Weichmacher, wie:

- Polyphenyle in einem weiten Viskositätsbereich, einschließlich wachsartiger Polyphenyle (Fa. Monsanto),
- Dibenzyltoluol,
- Isomerengemische von $C_{20}$- bis $C_{30}$-Aromaten,

wobei die Verwendung von Gemischen aus Weichmachem des Estertyps und des aromatischen Typs bevorzugt ist.

Ein Beispiel für ein bevorzugtes Gemisch ist Acetyltributylcitrat und Dibenzyltoluol.

Die Weichmacher vom Typ (B2) sind Verbindungen mit Molmassen über 2000 g/Mol und können unterschiedlichen Verbindungstypen, wie dem Polyethertyp, Polyestertyp, Polycarbonattyp, Polyolefintyp angehören, wobei als Endgruppen Hydroxyl-, Ether-, Alkyl- und Acylgruppen bevorzugt sind.

Die Auswahl der Endgruppen und ggf. weiterer funktioneller Gruppen erfolgt vorzugsweise derart, dass keine unerwünschten Reaktionen in den Massen ablaufen.

Besonders bevorzugte Endgruppen sind die primäre und die sekundäre OH-Gruppe sowie die Acetylgruppe.

Eine spezielle Verbindungsklasse von flüssigen Polymeren stellen solche vom Polyethertyp dar.

Hierbei zeichnen sich solche Polyether besonders aus, die die gleiche oder eine ähnliche Molmasse besitzen wie die in Bestandteil (A) verwendeten N-Alkylaziridinopolyether.

Bis-Hydroxyl- oder Bis-Acetyl-polyether aus Oxytetramethylen- und Oxydimethylen-Einheiten im Verhältnis 4 : 1 bis 3 : 1 und Molmassen im Bereich von 3000 bis 8000 g/Mol und einem Anteil an oligomeren cyclischen Ethem kleiner als 0,5 Gew.-% sind besonders bevorzugt.

Im Gemisch mit diesen speziellen Polyethern oder auch als alleinige Verbindungen gemäß Bestandteil (B2) können auch Polypropylenoxidpolyole und/oder Copolymerisate und/oder Blockcopolymerisate von Ethylenoxid und Propylenoxid mit Hydroxyl- oder Acetyl-Endgruppen eingesetzt werden.

Bei den Blockcopolymerisaten mit Molmassen größer 2000 g/Mol kann zusätzlich die lösungsvermittelnde Wirkung dieser tensidartigen Verbindungen genutzt werden.

Weiterhin kann durch die Wahl und die Mischung der vorgenannten Polyetherderivate das Fließverhalten und die notwendige Einstellung von Hydrophilie und Hydrophobie der gemischten Zubereitungen entscheidend beeinflusst werden.

Die erfindungsgemäßen Zubereitungen enthalten als Bestandteil (C) Füllstoffe.

Für diesen Zweck können organische und anorganische Feststoffe eingesetzt werden, die in den Substanzgemischen der jeweiligen Komponente während der notwendigen Lagerung keine unerwünschten Reaktionen hervorrufen und nach der Mischung der getrennt gelagerten Komponenten den Abbindeverlauf nicht beeinträchtigen.

Als organische Füllstoffe können bei Raumtemperatur und Temperaturen bis 40°C feste, wachsartige Substanzen und Fette, wie Trisacylglyceride eingesetzt werden.

Bevorzugt werden als Bestandteil (C) Trisacylester des Glycerins nicht tierischen Ursprungs in Kombination mit anorganischen Feststoffen eingesetzt.

Die Trisacylester des Glycerins können aus modifizierten Fetten pflanzlichen Ursprungs, beispielsweise aus hydriertem Palmöl oder Sojaöl oder aus synthetischen Fetten bestehen.

Geeignete Fette sind in der DE-A-197 11 514 beschrieben, auf die hier vollinhaltlich Bezug genommen wird. Besonders geeignet sind Avocadoöl, Baumwollsaatöl, Erdnussöl, Kakaobutter, Kürbiskemöl, Leinöl, Maiskeimöl, Olivenöl, Palmöl, Reisöl, Rüböle, Saffloröl, Sesamöl, Sojaöl, Sonnenblumenöl, Traubenkemöl, Weizenkeimöl, Borneotalg, Fulwatalg, Hanföl, Illipébutter, Lupinienöle, Kandelnussöl, Kapoköl, Katiaufett, Kenafsamenöl, Kekunaöl, Mohnöl, Mowrahbutter, Okraöl, Perillaol, Salbutter, Sheabutter und Tungöl, sofern diese Fette vor ihrer Verwendung gehärtet wurden. Als geeignet gehärtete Fette werden solche betrachtet, deren Jod-Zahl (gemessen nach der Norm DGF C-V 11b) kleiner als 20 ist. Besonders bevorzugt sind Fette, deren Jod-Zahl kleiner als 5 ist. Die Durchführung von Fetthärtungen ist beispielsweise in "Ullmanns Enzyklopädie der industriellen Chemie", 4. Aufl., Band 11, S. 469 beschrieben. Ebenso verwendbar sind Mischungen und interveresterte Mischungen dieser natürlich vorkommenden Fette, sowie künstlich hergestellte Fette, wie Softisan 154 oder Dynasan 118 (Fa. Hüls). Die Herstellung derartiger künstlicher Triacylglyceride ist für den Fachmann relativ einfach und kann beispielsweise aus Glycerin und den entsprechenden Fettsäuremethylestem erfolgen. Derartige Veresterungsreaktionen sind u. a. in "Houben-Weyl, Methoden der Organischen Chemie", Bd. E5/Teil 1, S. 659 ff. beschrieben. Bevorzugte Triacylglyceride entsprechen der Formel:

$$R^2\text{-O-}CH_2\text{-}CH(OR^1)\text{-}CH_2\text{-O-}R^3$$

in welcher $R^1$, $R^2$ und $R^3$ unabhängig voneinander $C_{11}H_{23}CO$, $C_{13}H_{27}CO$, $C_{15}H_{31}CO$ oder $C_{17}H_{35}CO$ bedeuten. Auch Gemische solcher Triacylglyceride kommen in Betracht.

Als anorganische Füllstoffe sind Feststoffe mit einem $SiO_2$-Anteil über 75 Gew.-%, wie Quarzmehl und feinteilige Kieselsäuren synthetischen oder natürlichen Ursprungs geeignet.

Bevorzugt sind pyrogene Kieselsäuren und Fällungskieselsäuren, die meist in oberflächenmodifizierter Form eingesetzt werden, sowie Diatomeenerde unterschiedlicher Fundstellen.

Gemische von aufbereiteter Diatomeenerde mit einem pH-Wert der 5 %-igen wässrigen Suspension von 8 bis 10 mit künstlichen Fetten mit einem Steaorylgehalt von mehr als 65 Gew.-% des Trisacylglycerids sind besonders bevorzugt.

Als Starter gemäß Bestandteil (D) können viele der bekannten Starter eingesetzt werden. Zweckmäßigerweise verwendet man solche Starter bzw. Startersysteme, die eine einfache Einstellung des Aushärtungsverlaufs zulassen, keine Nebenwirkungen erzeugen und die eine reproduzierbare Erreichung der erforderlichen Niveaus der mechanischen Eigenschaften ermöglichen.

In der DE-C-914 325 wird die Verwendung von Oxonium-, Ammonium- und Sulfoniumsalzen als Startersubstanzen vorgeschlagen.

Eine zusammenfassende Darstellung der für die Aushärtung von N-Alkylaziridinoverbindungen verwendeten Startersubstanzen ist in O. C. DERMER, G. E. HAM, "Ethylenimine and other Aziridines", Academic Press (1969) enthalten.

Als prinzipiell geeignete Polymerisationsauslöser haben sich demnach eine große Anzahl von Verbindungsklassen und Verbindungen erwiesen. In der praktischen Anwendung der kationischen Polymerisation von Aziridinopolyethem ist es aber sehr schwierig, den gewünschten Abbindungsverlauf mit ausreichend langer Verarbeitungszeit und schneller Endaushärtung einzustellen. Dieses Ziel kann durch die Verwendung von speziellen Trisalkylsulfoniumsalzen erreicht werden, wie sie beispielsweise in der EP-A-0 110 429 beschrieben sind.

In der Patentanmeldung DE-100 18 918 werden Starter beschrieben, die der Katalysatorkomponente einen

lediglich geringen Säuregrad verleihen und die eine gut einstellbare, relativ lange Verarbeitungszeit nach erfolgter Mischung von Basiskomponente und Katalysatorkomponente ermöglichen.

Startersysteme dieses Typs sind geeignet, die erfindungsgemäßen Basispasten in der notwendigen Geschwindigkeit auszuhärten. Durch ihre Verwendung sind die gewünschten Eigenschaften des elastischen Festkörpers erreichbar. Sie haben sich für die Aushärtung der N-Alkylaziridinopolyether gemäß vorliegender Erfindung besonders bewährt und werden mit Vorteilen gegenüber anderen Startersystemen eingesetzt.

Weiterhin können die erfindungsgemäßen Zubereitungen gemäß Bestandteil (E) weitere Wirkstoffe, wie Farbstoffe und Farbpigmente, Aromen und Geschmackskorrigentien, aminische oder alkalische Verzögerer, beschleunigend wirkende Verbindungen und weitere nicht-polymere Tenside, enthalten.

Im allgemeinen enthalten die erfindungsgemäßen Zubereitungen 0 bis 10 Gew.-% an Bestandteil (E), bevorzugt 0 bis 8 Gew.-%, weiter bevorzugt 0,001 bis 8 Gew.-%, weiter bevorzugt 0,01 bis 8 Gew.-% und besonders bevorzugt 0,1 bis 8 Gew.-%.

Unter anderem bevorzugte Farbstoffe und Farbpigmente sind beispielsweise verlackte Pigmente; besonders bevorzugt sind Eisenoxide wie beispielsweise Sicovit® Gelb Eisenoxidhydrat.

Unter anderem bevorzugte Aromen und Geschmackskorrigentien sind beispielsweise natürliche Aromen; weiter bevorzugt sind Karthäuser-, Grapefruit- und Minzearomen, besonders bevorzugt sind etwa Krauseminz-Aroma und Pfefferminzöl.

Unter anderem bevorzugte aminische oder alkalische Verzögerer sind beispielsweise lösliche Imidazolverbindungen; besonders bevorzugt sind 1-Aryl- und 1-Alkyl substituierte Imidazole wie beispelsweise solche, die in DE 32 45 052 genannt sind.

Unter anderem bevorzugte nicht-polymere Tenside sind beispielsweise nichtionische Tenside; besonders bevorzugt sind Silikonpolyethertenside, Blockcopolymere aus EO/PO, Alkylphenolderivate, und Fettalkoholderivate wie beispelsweise solche, die in DE 4306997 genannt sind.

Die Bestimmung der Viskosität der erfindungsgemäßen Prepolymeren wurde mit einem Roto-Viskosimeter der Firma Haake mit Messkörper DIN SV nach folgenden Maßgaben durchgeführt.

- Einstellung des Nullpunkts nachdem der Drehkörper befestigt wurde und bevor der befüllte Messkörper in der Messeinrichtung eingeführt wird mit folgenden Schalterstellungen durch Drehen an Potentiometer:
    - Dämpfung: 1
    - Anzeigenwahlschalter: T ()
    - Signalverstärkung: 10%
- Einfüllen der Messsubstanz in den Messkörper DIN SV derart, dass der Drehkörper später ca. 1 mm bedeckt ist.
- Temperieren der Probe ca. 20 min. bei 23,0°C
- Einstellen der nachfolgenden Messparameter, Einschalten des Gerätes und Ablesen des Messwertes in % nach seiner Stabilisierung:
    - Konstante A 18,1
    - Konstante M 6,45
    - D 9,0 %
- Auswertung mittels folgender Formel:

$$\text{Viskosität [Pa*s]} = \frac{\text{[Konstante A]* [Messwert in \%]}}{\text{[Konstante M] * [D \%]}}$$

Die Erfindung wird nachfolgend durch Beispiele näher beschrieben, ohne dass sie durch diese beschränkt werden soll.

<u>Herstellungsbeispiele Dentalmassen</u>

Mit Hilfe von Laborknetem wurden die beschriebenen Katalysatorkomponenten K1 und K2 im 100 g-Maßstab hergestellt. Die Herstellung der Basiskomponenten, die in der Tabelle 3 beschrieben sind, erfolgte im 500 g-Maßstab.

In Tabelle 4 sind die Mischungen zusammengestellt, die unter Verwendung der beschriebenen Katalysatorkomporienten und den in der Tabelle 3 beschriebenen Basiskomponenten im jeweils angegebenen Gewichtsverhältnis

untersucht wurden.

Die Mischungen gemäß Tabelle 4 wurden durch Anspateln auf den Mischblock innerhalb von 30 Sekunden zubereitet und zur Bestimmung der in Tabelle 5 zusammengestellten Eigenschaften eingesetzt.

Herstellung der Katalysatorkomponenten

Katalysatorkomponente K1

In einem Laborkneter wurden 44 g Acetyltributylcitrat (Bestandteil B1) vorgelegt und 22 g β-(S-Stearyl-S-ethylsulfonium)butyronitrilfluoroborat (hergestellt gemäß US-A-4,167,618, Beispiel 84) (Bestandteil D) eingelöst. In diese Mischung wurden 10 g Diatomeenerde und 24 g pyrogene Kieselsäure (HDK H 2000, Fa. Wacker) (Bestandteil C) eingearbeitet.

Katalysatorkomponente K2 (gemäß DE-100 18 918)

In einem Laborkneter wurden 61,1 g eines Poly(-ethylenoxid, -propylenoxid)-diols mit einer Molmasse von 3.000 g/Mol (Fa. Bayer AG, Acclaim 3201) (Bestandteil B2) vorgelegt und schrittweise 21 g einer hydrophobierten Fällungskieselsäure (Fa. Degussa, Sipemat D 17) (Bestandteil C) zugegeben.

9,9 g p-Toluolsulfonsäure-Monohydrat (Bestandteil D) wurden in 5 g destilliertem Wasser gelöst und der pastenförmigen Mischung zugesetzt. Nach Homogenisierung erfolgte die Zugabe einer Paste bestehend aus 2 g Zinkoxid (Bestandteil D) und 1 g Poly(-ethylenoxid, -propylenoxid)-diol (Fa. Bayer AG, Acclaim 3201) (Bestandteil B2) mit einer Molmasse von 3.000 g/Mol. Die Katalysatorkomponente wurde nach der letzten Zugabe noch eine Stunde geknetet.

Herstellung der N-Alkylaziridinoprepolymeren

Erfindungsbeispiele 1 bis 4 und Vergleichsbeispiel 1

Durch kationische Copolymerisation von Ethylenoxid und Tetrahydrofuran unter katalytischer Wirkung von Borfluorid-Etherat und mit Ethylenglykol als Starteralkohol wurde ein Polyetherdiol mit einer zahlenmittleren Molmasse von 6.100 g/Mol und einem molaren Einbauverhältnis von Tetramethylenoxy-Einheiten zu Dimethylenoxy-Einheiten von 3,5:1 hergestellt und mit Carbonyldiimidazol in das Polyetherdioldiimidazolid überführt.

Das Polyetherdioldiimidazolid wurde mit Hexamethylendiamin und Iminopropylenamin versetzt und die Mischung 72 Stunden bei 45° C gerührt, anschließend das Reaktionsgemisch mit Wasser gewaschen und im Vakuum bei 70° C getrocknet.

In Tabelle 1 sind die auf der letzten Synthesestufe realisierten molaren Verhältnisse und die Kennwerte der verlängerten N-Alkylaziridinopolyether zusammengestellt.

Beim Vergleichsbeispiel VB 1 wurde vom gleichen Ansatz Polyetherdioldiimidazolid ausgegangen und in der letzten Synthesestufe kein Hexamethylendiamin zugesetzt.

Die Kennwerte des gemäß Vergleichsbeispiel VB 1 hergestellten unverlängerten N-Alkylaziridinoprepolymers gingen in die Berechnung der Verlängerungszahl VZ ein, wie vorstehend beschrieben.

Tabelle 1:

| Herstellung und Charakterisierung der erfindungsgemäßen N-Alkylaziridinoprepolymere und des Vergleichsbeispiels VB 1 | | | | | | |
|---|---|---|---|---|---|---|
| | Molares Verhältnis | | | Viskosität [Pas] | Konz. der Aziridinogruppen [mAzÄ/kg] | Vz [a)] |
| | Polydioldiimidazolid | Hexamethylendiamin | Iminopropylenamin | | | |
| Erfindungsbeispiel 1 | 1,0 | 0,20 | 1,65 | 70,7 | 246 | 3,207 |
| Erfindungsbeispiel 2 | 1,0 | 0,30 | 1,47 | 116 | 223 | 5,804 |
| Erfindungsbeispiel 3 | 1,0 | 0,35 | 1,38 | 145 | 208 | 7,778 |
| Erfindungsbeispiel 4 | 1,0 | 0,40 | 1,26 | 180 | 193 | 9,952 |
| Vergleichsbeispiel VB 1 | 1,0 | ohne | 2,08 | 28,5 | 318 | 1,000 |

[a)] Die Berechnung der Verlängerungszahl VZ erfolgte unter Verwendung der Kennwerte des unverlängerten N-Alkylaziridinoprepolymeren gemäß Vergleichsbeispiel VB 1.

Erfindungsbeispiele 5 und 6

Ausgehend vom gleichen Ansatz des Polyetherdiols, wie bei den Erfindungsbeispielen 1 bis 4 beschrieben, wurde eine Kettenverlängerung mit Hexamethylendiisocyanat durchgeführt.

Hierzu wurde das Polyetherdiol mit einer zahlenmittleren Molmasse von 6100 g/Mol im angegebenen Molverhältnis mit Hexamethylendiisocyanat vermischt und die Mischungen 120 Stunden bei 50° C gerührt.

Das Isocyanat war unter diesen Bedingungen vollständig umgesetzt. Das so verlängerte Polyetherurethandiol wurde mit Acrylsäure unter katalytischer Wirkung von Kaliumcarbonat zum Diacrylat umgesetzt und an das Diacrylat in Analogie zu der in US-A-4,353,242, Beispiel 13, beschriebenen Vorgehensweise Ethylenimin angelagert.

Das Reaktionsgemisch wurde mit Wasser gewaschen und im Vakuum getrocknet.

In Tabelle 2 sind die auf der Verlängerungsstufe realisierten molaren Verhältnisse und die Kennwerte der verlängerten N-Alkylaziridinoprepolymeren zusammengestellt.

Tabelle 2:

| | Molares Verhältnis | | Viskosität [Pas] | Konz. der Aziridinogruppen [mAzÄ/kg] | VZ [a)] |
|---|---|---|---|---|---|
| | Polyetherdiol | Hexamethylendiisocyanat | | | |
| Beispiel 5 nicht erfindungsgemäß | 1,0 | 0,25 | 42 | 237 | 1,977 |
| Erfindungsbeispiel 6 | 1,0 | 0,33 | 55 | 213 | 2,881 |

[a)] Die Berechnung der Verlängerungszahl VZ erfolgte unter Verwendung der Kennwerte des unverlängerten N-Alkylaziridinoprepolymeren gemäß Vergleichsbeispiel VB 1.

Tabelle 3:

| Zusammensetzung der Basiskomponenten in g/100g | | | | | | | | | | | |
|---|---|---|---|---|---|---|---|---|---|---|---|
| | | Erfindungsbeispiel Nr. | | | | | | | | | Vergleichsbeisp. VB 2 |
| Bestandteil | | 7 | 8 | 9 | 10 | 11* | 12 | 13 | 14 | 15 | |
| A | N-Alkylaziridinoprepolymer gemäß Erfindungsbeispiel # | | | | | | | | | | |
| | 1 | 67,0 | | | | | | | 10,3 | | |
| | 2 | | 66,1 | | | | | 20,3 | | | |
| | 3 | | | 65,7 | | | | | 49,1 | | |
| | 4 | | | | 65,5 | | | 40,1 | | 14,3 | |
| | 5 | | | | | 70,7 | | | | | |
| | 6 | | | | | | 60,0 | | | 41,7 | |
| | gemäß Vergleichsbeispiel VB 1 | | | | | | | | | | 59,6 |
| B1 | Dibenzyltoluol | 11,2 | 10,4 | 8,9 | 12,7 | 14,7 | 11,3 | 10,7 | 7,9 | 13,1 | 10,0 |
| C | Synthetisches Trisacylglycerid mit einem Steaorylgehalt von 75 Gew.-% | 7,1 | 11 | 13 | 8,7 | 6,6 | 16,0 | 15,6 | 18,7 | 17,8 | 16,7 |
| | Diatomeenerde (Celatom MW 25, Fa. CHEMAG) | 14,7 | 12,0 | 11,7 | 13,1 | 8,0 | 12,7 | 13,3 | 14,0 | 13,1 | 13,7 |
| * nicht erfindungsgemäß | | | | | | | | | | | |

Tabelle 4: Mischungsverhältnisse der Zubereitungen, Erfindungsbeispiele 16 bis 27 und Vergleichsbeispiel VB 3

| | Erfindungsbeispiel Nr. | | | | | |
|---|---|---|---|---|---|---|
| | 16 | 17 | 18 | 19 | 20 | 21 |
| Basiskomponente gemäß Tab. 3 | 7 | 8 | 9 | 9 | 10 | 10 |
| Katalysatorkomponente | K1 | K1 | K2 | K1 | K1 | K2 |
| Mischungsverhältnis nach Gewicht: Katalysatorkomponente zu Basiskomponente | 1:4,2 | 1:5,0 | 1:5,0 | 1:4,3 | 1:4,2 | 1:5,0 |

| | Erfindungsbeispiel Nr. | | | | | | Vergleichsbeisp. VB 3 |
|---|---|---|---|---|---|---|---|
| | 22* | 23 | 24 | 25 | 26 | 27 | |
| Basiskomponente gemäß Tab. 3 | 11 | 12 | 13 | 13 | 14 | 15 | VB 2 |
| Katalysatorkomponente | K1 | K2 | K2 | K1 | K1 | K2 | K2 |
| Mischungsverhältnis nach Gewicht: Katalysatorkomponente zu Basis-komponente | 1:5,0 | 1:4,9 | 1:5,0 | 1:4,1 | 1:4,0 | 1:4,7 | 1:4,9 |

* nicht erfindungsgemäß

Tabelle 5: Verarbeitungsverhalten und erreichte mechanische Eigenschaften der Zubereitungen gemäß Tabelle 4

| Eigenschaft | Erfindungsbeispiel Nr. | | | | | | |
|---|---|---|---|---|---|---|---|
| | 16 | 17 | 18 | 19 | 20 | 21 | 22* |
| Gesamtverarbeitungszeit (23° C) [sec] nach EN 24823 | 105 | 115 | 155 | 120 | 125 | 175 | 110 |
| Aushärtungsende [a] [sec] | 250 | 300 | 480 | 325 | 370 | 510 | 320 |
| Shore A-Härte nach 24 h gemäß DIN 53505 | 60 | 58 | 55 | 57 | 54 | 52 | 59 |
| Reißdehnung [%] gemäß EN 24823 | 99 | 112 | 145 | 142 | 190 | 195 | 105 |
| Reißfestigkeit [MPa] gemäß EN 24823 | 1,43 | 1,35 | 1,46 | 1,47 | 1,41 | 1,51 | 1,37 |

| Eigenschaft | Erfindungsbeispiel/Vergleichsbeispiel Nr. | | | | | |
|---|---|---|---|---|---|---|
| | 23 | 24 | 25 | 26 | 27 | VB 3 |
| Gesamtverarbeitungszeit (23° C) [sec] nach EN 24823 | 160 | 155 | 120 | 115 | 165 | 160 |
| Aushärtungsende [b] [sec] | 460 | 440 | 330 | 315 | 450 | 450 |
| Shore A-Härte nach 24 h gemäß DIN 53505 | 54 | 53 | 57 | 56 | 52 | 58 |
| Reißdehnung [%] gemäß EN 24823 | 117 | 160 | 155 | 150 | 137 | 72 |
| Reißfestigkeit [Mpa] gemäß EN 24823 | 1,27 | 1,54 | 1,49 | 1,52 | 1,41 | 1,17 |

[b] Als Aushärtungsende wird der Zeitpunkt definiert, bei dem ein elastischer Festkörper vorliegt, der keine durch Betasten wahrnehmbare Oberflächenklebrigkeit besitzt.

* nicht erfindungsgemäß

Aus den Ergebnissen in Tabelle 5 geht hervor, dass unter Verwendung der erfindungsgemäßen verlängerten N-Alkylaziridinoprepolymeren Gesamtverarbeitungszeiten im Bereich von 90 bis 180 Sekunden, Reißfestigkeitswerte größer 1,0 MPa und Shore A-Härten nach

Die Vorteile der Elastomeren, die unter Verwendung der erfindungsgemäßen Prepolymeren hergestellt wurden (Erfindungsbeispiele 16 bis 27), zeigen sich sehr deutlich im Kennwert Reißdehnung, verglichen mit dem Elastomer, das mit einem nicht verlängerten Prepolymer (Vergleichsbeispiel VB 3) erzeugt wurde.

## Patentansprüche

1. Mischung von kettenverlängerten N-Alkylaziridinoprepolymeren der folgenden allgemeinen Formel

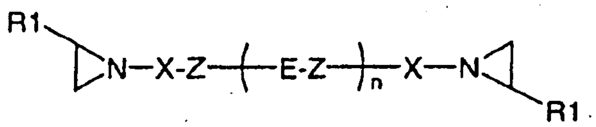

worin bedeuten:

n: eine ganze Zahl von 1 bis 50;
R1: H oder $C_1$- bis $C_{12}$-Alkyl;
X: einen zweiwertigen, gesättigten oder ungesättigten, linearen, verzweigten, cyclischen oder polycyclischen Kohlenwasserstoffrest, der 0 bis 5 Heteroatome aus der Gruppe O, NR1, S enthalten kann und insgesamt 1 bis 50, bevorzugt 2 bis 30 und besonders bevorzugt 2 bis 20 C-Atome umfasst und dieser Kohlenwasserstoffrest eine Gruppierung ausgewählt aus einer Gruppe, umfassend -NR1-(C=O)-O-, -(C=O)-O-, -(C=O)-S- enthält, die die kovalente Anbindung zum Polymerrest Z darstellt;
Z: einen zweiwertigen Prepolymerrest mit zahlenmittleren Molmassen im Bereich von 1.500 bis 45.000 g/Mol aus der Gruppe, umfassend Polyester, Polycarbonate, Polyolefine, Polysiloxane und Polyether;
E: -X'-A-X'-
A: zweifach radikalischer gesättigter oder ungesättigter linearer, verzweigter, cyclischer oder polycyclischer, gegebenenfalls auch Aromaten enthaltender Kohlenwasserstoffrest, der 0 bis 15 Heteroatome aus der Gruppe O, NR1, S enthalten kann und insgesamt 0 bis 50, bevorzugt 1 bis 30 und besonders bevorzugt 1 bis 20 C-Atome umfasst;
X': zweifach radikalischer gesättigter oder ungesättigter linearer, verzweigter, cyclischer oder polycyclischer, gegebenenfalls auch Aromaten enthaltender Rest, der 0 bis 15 Heteroatome aus der Gruppe O, NR1, S enthalten kann und dieser Rest eine Gruppierung ausgesucht aus einer Gruppe, umfassend: -NR1 -(C=O) -O-, -NR1-(C=O)-NR1-, -(C=O)-O-, -(C=O)-S enthält, die die kovalente Anbindung zum Polymerrest Z darstellt,

mit nicht kettenverlängerten N-Alkylaziridinoprepolymeren der allgemeinen Formel

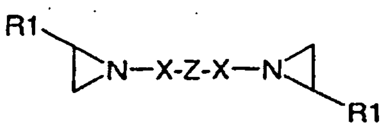

in welcher R1, X und Z die obige Bedeutung haben, und wobei die Verlängerungszahl (VZ) einer Mischung von kettenverlängerten und nicht kettenverlängerten N-Alkylaziridinoprepolymeren 2,0 bis 30 beträgt und diese Verlängerungszahl definiert ist als:

$$VZ = \frac{\frac{\eta_v}{\eta_o}}{\frac{[Az]_v}{[Az]_o}}$$

mit

η = inhärente Viskosität des Prepolymeren, bestimmt mit einem Haake-Viskosimeter bei 23° C, angegeben in Pa · s
[Az] = Konzentration der Aziridinogruppen, bestimmt durch Titration, angegeben in milli-Aziridinoäquivalente/kg
Index $_v$ = bezeichnet die partiell verlängerten Prepolymeren
Index $_o$ = bezeichnet die unverlängerten Prepolymeren.

**2.** Mischung gemäß Anspruch 1, wobei der Prepolymerrest Z der kettenverlängerten N-Alkylaziridinoprepolymere eine Polyetherstruktur aufweist.

**3.** Mischung gemäß Anspruch 2, wobei die Polyetherstruktur aus Dimethylenoxy- und Tetramethylenoxy-Einheiten besteht und das molare Verhältnis dieser Monomereinheiten 1:2,5 bis 1:5 beträgt.

4. Mischungen von N-Alkylaziridinoprepolymeren gemäß einem der Ansprüche 1 bis 3, wobei die Urethanäquivalentmasse der Mischung 2.000 bis 13.000 g/Urethangruppe beträgt.

5. Herstellung einer Mischung von N-Alkylaziridinoprepolymeren gemäß einem der Ansprüche 1 bis 4 durch ein Verfahren, umfassend die Schritte:

   a) kationische Copolymerisation von Ethylenoxid und Tetrahydrofuran unter Verwendung von Starteralkoholen mit zwei OH-Gruppen,
   b) Umsetzung des erhaltenen Polyetherdiols in Polyetherdichlorformiate und
   c) deren Umsetzung mit Alkylendiamin und mit Iminoalkylenamin im Molverhältnis Polyetherdichlorformiat : Alkylendiamin : Iminoalkylenamin von 1:0,01:2,05 bis 1:0,95:0,15.

6. Herstellung einer Mischung von N-Alkylaziridinoprepolymeren gemäß einem der Ansprüche 1 bis 4 durch ein Verfahren, umfassend die Schritte:

   a) kationische Copolymerisation von Ethylenoxid und Tetrahydrofuran unter Verwendung von Starteralkoholen mit zwei OH-Gruppen,
   b) Umsetzung des erhaltenen Polyetherdiols mit Acrylsäure zum Polyetherdiacrylat sowie
   c) Anlagerung von Alkylendiamin und davor oder nachfolgend von Ethylenimin an die Acrylatdoppelbindung im Molverhältnis Acrylatgruppe : Alkylendiamin : Ethylenimin von 1:0,01:1 bis 1:0,30:0,45.

7. Herstellung einer Mischung von N-Alkylaziridinoprepolymeren gemäß einem der Ansprüche 1 bis 4 durch ein Verfahren, umfassend die Schritte:

   a) kationische Copolymerisation von Ethylenoxid und Tetrahydrofuran unter Verwendung von Starteralkoholen mit zwei OH-Gruppen,
   b) Umsetzung des erhaltenen Polyetherdiols zum Polyetherdioldiimidazolid und dessen
   c) Umsetzung mit Alkylendiamin und mit Iminoalkylenamin im Molverhältnis Polyetherdioldiimidazolid : Alkylendiamin : Iminoalkylenamin von 1:0,01:2,05 bis 1:0,95:0,15.

8. Herstellung einer Mischung von N-Alkylaziridinoprepolymeren gemäß einem der Ansprüche 1 bis 4 durch ein Verfahren, umfassend die Schritte:

   a) kationische Copolymerisation von Ethylenoxid und Tetrahydrofuran unter Verwendung von Starteralkoholen mit zwei OH-Gruppen,
   b) partielle Kettenverlängerung des Polyetherdiols mit Diisocyanaten im Molverhältnis 1:0,99 bis 1:0,01,
   c) Umsetzung der restlichen OH-Gruppen zu N-Alkylaziridinogruppen.

9. Härtbare Zubereitung, umfassend:

   (A) 20 bis 84,9 Gew.-% kettenverlängerte N-Alkylaziridinoprepolymere nach einem der Ansprüche 1 bis 3 oder Mischungen von kettenverlängerten und nicht-kettenverlängerten N-Alkylaziridinoprepolymeren nach einem der Ansprüche 1 bis 4,
   (B) 5 bis 40 Gew.-% Verbindungen, die eine Weichstellung der ausgehärteten Dentalmassen bewirken,
   (C) 10 bis 40 Gew.-% Füllstoffe,
   (D) 0,1 bis 10 Gew.-% Starter,
   (E) 0 bis 10 Gew.-% weitere Wirkstoffe.

10. Härtbare Zubereitung nach Anspruch 9, wobei kettenverlängerte N-Alkylaziridinoprepolymere eingesetzt werden, deren zahlenmittlere Molmasse mindestens den doppelten Wert von nicht kettenverlängerten N-Alkylaziridinoprepolymeren mit einer Molmasse aus dem Bereich von 1.500 bis 45.000 g/Mol aufweist.

11. Verwendung der härtbaren Zubereitungen nach Anspruch 9 oder 10 als Dentalmassen, insbesondere als Abformmassen.

## Claims

**1.** Mixture of chain-extended N-alkylaziridino prepolymers of the following general formula

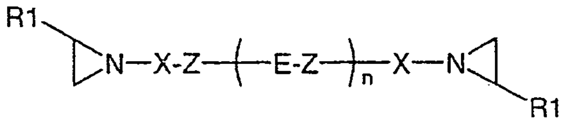

in which

n is an integer from 1 to 50;
R1 is H or $C_1$- to $C_{12}$-alkyl;
X is a divalent, saturated or unsaturated, linear, branched, cyclic or polycyclic hydrocarbon radical which may contain from 0 to 5 hetero atoms from the group consisting of O, NR1 and S and comprises altogether from 1 to 50, preferably from 2 to 30 and particularly preferably from 2 to 20 C atoms, and this hydrocarbon radical contains a group selected from a group consisting of -NR1-(C=O)-O-, -(C=O)-O- and -(C=O)-S-, which represents the covalent link to the polymer radical Z;
Z is a divalent prepolymer radical having number average molar masses in the range from 1 500 to 45 000 g/mol, from the group consisting of polyesters, polycarbonates, polyolefins, polysiloxanes and polyethers;
E is -X'-A-X'-;
A is a divalent saturated or unsaturated linear, branched, cyclic or polycyclic hydrocarbon radical which optionally also contains aromatics and may contain from 0 to 15 hetero atoms from the group consisting of O, NR1 and S and comprises altogether from 0 to 50, preferably from 1 to 30, particularly preferably from 1 to 20 C atoms;
X' is a divalent saturated or unsaturated, linear, branched, cyclic or polycyclic radical which optionally also contains aromatics and may contain from 0 to 15 hetero atoms from the group consisting of O, NR1 and S, and this radical contains a group selected from the group consisting of -NR1-(C=O)-O-, -NR1-(C=O)-NR1-, -(C=O)-O- and -(C=O)-S-, which represents the covalent link to the polymer radical Z,

with non-chain-extended N-alkylaziridino prepolymers of the general formula

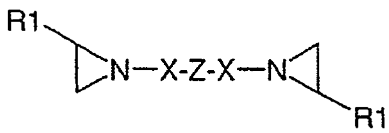

in which R1, X and Z have the above meaning, and wherein the extension number (EN) of a mixture of chain-extended and non-chain-extended N-alkylaziridino prepolymers is from 2.0 to 30 and this extension number is defined as:

$$EN = \frac{\frac{\eta_e}{\eta_o}}{\frac{[Az]_e}{[Az]_o}}$$

where

$\eta$ = inherent viscosity of the prepolymer, determined using a Haake viscometer at 23°C, stated in Pa·s
[Az] = concentration of the aziridino groups, determined by titration, stated in aziridino milliequivalents/kg
$Index_e$ designates the partially extended prepolymers
$Index_o$ designates the unextended prepolymers.

**2.** Mixture according to Claim 1, **characterized in that** the prepolymer radical Z of the chain-extended N-alkylaziridino prepolymers has a polyether structure.

**3.** Mixture according to Claim 2, **characterized in that** the polyether structure consists of dimethyleneoxy and tetramethyleneoxy units and the molar ratio of these monomer units is from 1:2.5 to 1:5.

**4.** Mixture of N-alkylaziridino prepolymers according to any of Claims 1 to 3, **characterized in that** the urethane equivalent mass of the mixture is from 2 000 to 13 000 g/urethane group.

**5.** Preparation of a mixture of N-alkylaziridino prepolymers according to any of Claims 1 to 4, comprising the steps:

a) cationic copolymerization of ethylene oxide and tetrahydrofuran with the use of initiator alcohols having two OH groups,
b) conversion of the polyetherdiol obtained into polyether dichloroformates and
c) the reaction thereof with alkylenediamine and with iminoalkylenamine in the molar ratio of polyether dichloroformate : alkylenediamine : iminoalkylenamine of from 1:0.01:2.05 to 1:0.95:0.15.

**6.** Preparation of a mixture of N-alkylaziridino prepolymers according to any of Claims 1 to 4 by a process comprising the steps:

a) cationic copolymerization of ethylene oxide and tetrahydrofuran with the use of initiator alcohols having two OH groups,
b) reaction of the polyetherdiol obtained with acrylic acid to give the polyether diacrylate and
c) addition of alkylenediamine and, before or subsequently, of ethylenimine at the acrylate double bond in a molar ratio of acrylate group : alkylenediamine : ethylenimine of from 1:0.01:1 to 1:0.30:0.45.

**7.** Preparation of a mixture of N-alkylaziridino prepolymers according to any of Claims 1 to 4 by a process comprising the steps:

a) cationic copolymerization of ethylene oxide and tetrahydrofuran with the use of initiator alcohols having two OH groups,
b) conversion of the polyetherdiol obtained into the polyetherdioldiimidazolide and
c) the reaction thereof with alkylenediamine and with iminoalkylenamine in the molar ratio of polyetherdioldiimidazolide : alkylenediamine : iminoalkylenamine of from 1:0.01:2.05 to 1:0.95:0.15.

**8.** Preparation of a mixture of N-alkylaziridino prepolymers according to any of Claims 1 to 4 by a process comprising the steps:

a) cationic copolymerization of ethylene oxide and tetrahydrofuran with the use of initiator alcohols having two OH groups,
b) partial chain extension of the polyetherdiol with diisocyanates in the molar ratio of from 1:0.99 to 1:0.01,
c) conversion of the remaining OH groups into N-alkylaziridino groups.

**9.** Curable formulation comprising:

(A) from 20 to 84.9% by weight of chain-extended N-alkylaziridino prepolymers according to any of Claims 1 to 3 or mixtures of chain-extended and non-chain-extended N-alkylaziridino prepolymers according to any of Claims 1 to 4,
(B) from 5 to 40% by weight of compounds which soften the cured dental materials,
(C) from 10 to 40% by weight of fillers,
(D) from 0.1 to 10% by weight of initiators,
(E) from 0 to 10% by weight of further active substances.

**10.** Curable formulation according to Claim 9, **characterized in that** chain-extended N-alkylaziridino prepolymers whose number average molar mass has at least twice the value of non-chain-extended N-alkylaziridino prepolymers having a molar mass in the range from 1 500 to 45 000 g/mol are used.

**11.** Use of the curable formulations according to Claim 9 or 10 as dental materials, in particular as impression compounds.

**Revendications**

1. Mélange de prépolymères N-alkylaziridino à chaîne prolongée, de formule générale

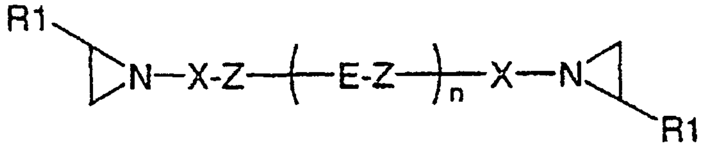

dans laquelle :

n représente un nombre entier de 1 à 50 ;
R1 : H ou un groupe alkyle en $C_1$-$C_{12}$ ;
X représente un radical hydrocarboné divalent, saturé ou insaturé, linéaire, ramifié, cyclique ou polycyclique, qui peut comporter de 0 à 5 hétéroatomes choisis dans le groupe constitué par O, NR1, S et comprend au total de 1 à 50, de préférence de 2 à 30 et de façon particulièrement préférée de 2 à 20 atomes de carbone, et ce radical hydrocarboné contient un groupement choisi dans l'ensemble comprenant -NR1-(C=O)-O-, -(C=O)-O-, -(C=O)-S-, qui représente le chaînon de liaison covalente au reste polymère Z ;
Z représente un reste prépolymère divalent de masse moléculaire moyenne en nombre dans la plage de 1 500 à 45 000 g/mole, choisi dans le groupe comprenant des polyesters, des polycarbonates, des polyoléfines, des polysiloxanes et des polyéthers ;
E : -X'-A-X'-
A représente un radical hydrocarboné doublement radicalaire, saturé ou insaturé, linéaire, ramifié, cyclique ou polycyclique, éventuellement contenant également des noyaux aromatiques, qui peut comporter de 0 à 15 hétéroatomes choisis dans le groupe constitué par O, NR1, S, et comprend au total de 0 à 50, de préférence de 1 à 30 et de façon particulièrement préférée de 1 à 20 atomes de carbone ;
X' représente un radical doublement radicalaire, saturé ou insaturé, linéaire, ramifié, cyclique ou polycyclique, éventuellement contenant également des noyaux aromatiques, qui peut comporter de 0 à 15 hétéroatomes choisis dans le groupe constitué par O, NR1, S, et ce radical contient un groupement choisi dans un ensemble comprenant : NR1-(C=O)-O-, -NR1-(C=O)-NR1, -(C=O)-O-, -(C=O)-S, qui représente le chaînon de liaison covalente au reste polymère Z.

et de prépolymères N-alkylaziridino à chaîne non prolongée, de formule générale

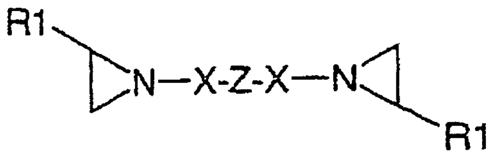

dans laquelle R1, X et Z ont les significations données plus haut, dans lesquels l'indice de prolongement (VZ) d'un mélange de prépolymères N-alkylaziridino à chaîne prolongée et de prépolymères N-alkylaziridino à chaîne non prolongée va de 2.0 à 30, et cet indice de prolongement est défini par :

$$VZ = \frac{\frac{\eta_v}{\eta_o}}{\frac{[Az]_v}{[Az]_o}}$$

où

η = viscosité inhérente du prépolymère, déterminée à l'aide d'un viscosimètre Haake à 23 °C, indiquée en Pa.s
[Az] = concentration des groupes aziridino, déterminée par titrage, indiquée en milliéquivalents aziridino/kg
indice $_v$ désigne les prépolymères partiellement prolongés
indice $_o$ désigne les prépolymères non prolongés.

**2.** Mélange selon la revendication 1, dans lequel le reste prépolymère Z des prépolymères N-alkylaziridino à chaîne prolongée présente une structure polyéther.

**3.** Mélange selon la revendication 2, dans lequel la structure polyéther consiste en motifs diméthylène-oxy et tétraméthylène-oxy, et le rapport molaire de ces motifs monomères va de 1:2,5 à 1:5.

**4.** Mélanges de prépolymères N-alkylaziridino selon l'une quelconque des revendications 1 à 3, dans lesquels la masse d'équivalents uréthanne du mélange va de 2 000 à 13 000 g/groupe uréthanne.

**5.** Préparation d'un mélange de prépolymères N-alkylaziridino selon l'une quelconque des revendications 1 à 4, par un procédé comprenant les étapes :

a) copolymérisation cationique d'oxyde d'éthylène et tétrahydrofuranne, avec utilisation d'alcools amorceurs à deux groupes OH,
b) conversion du polyétherdiol obtenu en polyétherdichloroformiate et
c) réaction de ce dernier avec une alkylènediamine et avec une iminoalkylène-amine en un rapport molaire polyétherdichloroformiate : alkylènediamine : imino-alkylène-amine de 1:0,01:2,05 à 1:0,95:0,15.

**6.** Préparation d'un mélange de prépolymères N-alkylaziridino selon l'une quelconque des revendications 1 à 4, par un procédé comprenant les étapes :

a) copolymérisation cationique d'oxyde d'éthylène et tétrahydrofuranne avec utilisation d'alcools amorceurs à deux groupes OH,
b) réaction du polyétherdiol obtenu avec de l'acide acrylique, conduisant au polyétherdiacrylate, ainsi que
c) fixation par addition d'alkylènediamine et, précédemment ou successivement d'éthylène-imine, sur la double liaison de l'acrylate, en un rapport molaire groupe acrylate : akylènediamine : éthylène-imine de 1:0,01:1 à 1:0,30:0,45.

**7.** Préparation d'un mélange de prépolymères N-alkylaziridino selon l'une quelconque des revendications 1 à 4, par un procédé comprenant les étapes :

a) copolymérisation cationique d'oxyde d'éthylène et tétrahydrofuranne avec utilisation d'alcools amorceurs à deux groupes OH,
b) conversion du polyétherdiol obtenu en le polyétherdioldiimidazolide et
c) réaction de ce dernier avec une alkylènediamine et avec une iminoalkylène-amine en un rapport molaire polyétherdioldiimidazolide : alkylènediamine : imino-alkylène-amine de 1:0,01:2,05 à 1:0,95:0,15.

**8.** Préparation d'un mélange de prépolymères N-alkylaziridino selon l'une quelconque des revendications 1 à 4, par un procédé comprenant les étapes :

a) copolymérisation cationique d'oxyde d'éthylène et tétrahydrofuranne avec utilisation d'alcools amorceurs à deux groupes OH,
b) prolongement partiel de chaîne du polyéther diol avec des diisocyanates en un rapport molaire de 1:0,99 à 1:0,01,
c) conversion des groupes OH restants en groupes N-alkylaziridino.

**9.** Préparation durcissable comprenant

(A) 20 à 84,9 % en poids de prépolymères N-alkylaziridino à chaîne prolongée selon l'une quelconque des revendications 1 à 3 ou de mélanges de prépolymères N-alkylaziridino à chaîne prolongée et de prépolymères N-alkylaziridino à chaîne non prolongée selon l'une quelconque des revendications 1 à 4,

(B) 5 à 40 % en poids de composés qui provoquent une plastification des matières dentaires durcies,
(C) 10 à 40 % en poids de charges,
(D) 0,1 à 10 % en poids d'amorceur,
(E) 0 à 10 % en poids d'autres substances actives.

**10.** Préparation durcissable selon la revendication 9, dans laquelle on utilise des prépolymères N-alkylaziridino à chaîne prolongée dont la masse moléculaire moyenne en nombre représente au moins le double de celle de prépolymères N-alkylaziridino à chaîne non prolongée, ayant une masse moléculaire dans la plage allant de 1 500 à 45 000 g/mole.

**11.** Utilisation des préparations durcissables selon la revendication 9 ou 10, en tant que matières dentaires, en particulier en tant que pâtes à empreinte.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1745810 C
- DE 3246654 C
- EP 0421371 A
- EP 0110429 A
- DE 19740234 A
- US 3453242 A
- DE 19711514 A
- DE 914325 C
- DE 10018918
- DE 3245052
- DE 4306997
- US 4167618 A
- US 4353242 A


### In der Beschreibung aufgeführte Nicht-Patentliteratur


- **BETRACHT.** *Houben-Weyl,* vol. 11/2, 272 ff
- *Ullmanns Enzyklopädie der industriellen Chemie,* vol. 11, 469